# EUROPÄISCHE PATENTSCHRIFT

(11) **EP 0 495 827 B1**
(45) Veröffentlichungstag und Bekanntmachung des Hinweises auf die Patenterteilung: **26.05.1993**
(21) Anmeldenummer: 90914913.0
(22) Anmeldetag: 12.10.1990
(51) Int. Cl.: G11B 15/68

(54) **KASSETTENWECHSLER**
CASSETTE CHANGER
CHANGEUR DE CASSETTES

(30) Priorität: 14.10.1989 DE 8912246 U
(43) Veröffentlichungstag der Anmeldung: 29.07.1992
(73) Patentinhaber: ABK SYSTEME GESELLSCHAFT FUR AUSBILDUNG, BERATUNG UND KOMMUNIKATIONSSYSTEME M.B.H., D-63303 Dreieich (DE)
(72) Erfinder: GERHARDT, Armin, D-6072 Dreieich (DE); HÄUSSERMANN, Rainer, D-7064 Remshalden (DE)
(74) Vertreter: Katscher, Helmut, Dipl.-Ing.
(86) Internationale Anmeldenummer: EP9001730
(87) Internationale Veröffentlichungsnummer: WO9106100

(56) Entgegenhaltungen:
- EP-A- 0 163 463
- Patent Abstracts of Japan, volume 10, No 72, P438, abstract of JP 60-209960, publ 1985-10-22
- Patent Abstracts of Japan, volume 12, No 114, P688, abstract of JP62-243153, publ 1987-10-23
- Patent Abstracts of Japan, volume 10,No 266, P496 abstract of JP 61-92467, publ. 1986-05-10

## Beschreibung

Die Erfindung betrifft einen Kassettenwechsler zur automatischen Handhabung von Magnetbandkassetten zwischen einem Kassettenmagazin und einer Magnetbandeinheit, wobei ein Greiferschlitten an einem Führungsständer in einer senkrechten und einer waagerechten Bewegungsachse bewegbar ist und einen Greiferkopf mit einem Kassettengreifer trägt, der um eine rechtwinklig zu diesen beiden Bewegungsachsen verlaufende Schwenkachse schwenkbar ist.

Zur Datensicherung bei Datenverarbeitungseinrichtungen, die üblicherweise Festplattenspeicher mit hoher Speicherkapazität haben, sind mehrere Magnetbandkassetten erforderlich, um die anfallende Datenmenge aufzunehmen. Daher müssen mehrere, in einem Kassettenmagazin aufgenommene Magnetbandkassetten nacheinander einzeln einer Magnetbandeinheit zugeführt und danach aus dieser wieder in das Kassettenmagazin zurückgebracht werden. Da die Datenübertragung jeweils verhältnismäßig lange Zeit beansprucht, bis wieder ein Kassettenwechselvorgang erforderlich ist, wird eine Automatisierung dieses Wechselvorgangs angestrebt, damit ein Betrieb ohne Bedienungsperson, beispielsweise nachts, ermöglicht wird.

Bei einem bekannten Kassettenwechsler ist das die Magnetbandkassetten gestapelt aufnehmende Kassettenmagazin höhenbeweglich in einem Magazinschacht angeordnet (DE-OS 39 04 726). Das Kassettenmagazin wird durch einen gesteuerten Hubantrieb jeweils in eine solche Hubstellung gebracht, daß sich die jeweils auszuwechselnde Magnetbandkassette in einer Ladeposition befindet, in der sie aus dem Kassettenmagazin in den Kassettenschacht der Magnetbandeinheit überführt werden kann.

Dieser bekannte Kassettenwechsler ist von verhältnismäßig kompliziertem Aufbau. Da die Magnetbandkassette vollständig in den Aufnahmeschacht der Magnetbandeinheit eingeschoben werden muß, ist hierzu eine besondere, konstruktiv aufwendige Einschubvorrichtung erforderlich.

Bei einer bekannten Wechseleinrichtung für Datenspeicher mit den eingangs genannten Merkmalen (JP 60-236147 A. In Patents Abstracts of Japan, P-448, April 18, 1986, Vol. 10, No. 102) sind das Kassettenmagazin und die Lesestation, in die die Datenspeicher gebracht werden sollen, in einer gemeinsamen Frontfläche untergebracht, vor der der Greiferkopf senkrecht und waagerecht verfahrbar ist.

Dadurch ergibt sich ein verhältnismäßig großer Platzbedarf. Außerdem sind lange und damit teure Führungsbahnen für den Greiferschlitten bzw. den Greiferkopf erforderlich. Der Greifer erstreckt sich in Richtung der Schwenkachse des Greiferkopfes. Für das Aus- und Einfahren des Greifers ist daher ein zusätzlicher Bewegungsantrieb in einer weiteren Achse erforderlich.

Aufgabe der Erfindung ist es daher, einen Kassettenwechsler der eingangs genannten Gattung zu schaffen, der von einfachem Aufbau ist und wenig Platz beansprucht und bei dem keine zusätzliche Einschubvorrichtung zur Bedienung der Magnetbandeinheit erforderlich ist.

Diese Aufgabe wird erfindungsgemäß dadurch gelöst, daß das Kassettenmagazin und die Magnetbandeinheit einander gegenüberstehend angeordnet sind und der Greiferkopf in dem dazwischenliegenden Arbeitsraum bewegbar ist, daß sich die waagereche Bewegungsachse des Greiferschlittens zwischen dem Kassettenmagazin und der Magnetbandeinheit erstreckt und daß sich der Kassettengreifer quer zur Schwenkachse des Greiferkopfes erstreckt.

Diese in konstruktiv einfacher Weise erzielbare dreiachsige Bewegung des Greiferkopfes reicht aus, um alle Bewegungen des Kassettengreifers auszuführen, um jede beliebige Magnetbandkassette aus einem feststehenden Kassettenmagazin zu übernehmen, einer im Abstand gegenüberliegenden Magnetbandeinheit zuzuführen und nach erfolgter Datenübertragung wieder aus der Magnetbandeinheit zu entnehmen und in das Kassettenmagazin zurückzuführen. Diese dreiachsige Bewegung kann mit verhältnismäßig geringem Steuerungsaufwand durchgeführt werden, weil nur für diese drei Bewegungsachsen (senkrechte und waagerechte Linearbewegung sowie Schwenkbewegung) eine Wegsteuerung erforderlich ist.

Da der Kassettengreifer nicht nur gegenüber dem Kassettenmagazin, sondern ebenso auch gegenüber der auf der anderen Seite angeordneten Magnetbandeinheit frei höhenbeweglich ist, ist es auch möglich, zwei Magnetbandeinheiten übereinander anzuordnen und diese z.B. wechselweise zu bedienen. Somit ist es ohne zusätzlichen Aufwand möglich, den Kassettenwechsler auch beim Kopieren von Magnetbandkassetten einzusetzen, wobei der einen Magnetbandeinheit aus dem Kassettenmagazin die zu kopierenden Magnetbandkassetten und der anderen Magnetbandeinheit die Magnetbandkassetten zugeführt werden, auf die kopiert wird.

Da das Kassettenmagazin nur an seiner Entnahmeseite zugänglich sein muß, ist es ohne weiteres möglich, mehrere Kassettenmagazine auf einem Schlitten oder einem Karussell aufzunehmen und wahlweise in die Position zu bringen, in der die Magnetbandkassetten für den Kassettengreifer zugänglich sind.

Vorteilhafte Ausgestaltungen des Erfindungsgedankens sind Gegenstand von Unteransprüchen.

Nachfolgend werden Ausführungsbeispiele der Erfindung näher erläutert, die in der Zeichnung dargestellt ist. Es zeigt:
Fig. 1 eine Draufsicht auf einen Kassettenwechsler mit einer darauf aufgenommenen Magnetbandeinheit und einem Kassettenmagazin, wobei der Führungsständer im Schnitt dargestellt ist,
Fig. 2 eine Aufsicht des Kassettenwechslers nach Fig. 1 in Richtung des Pfeiles II,
Fig. 3 und 4 Ansichten entsprechend der Fig. 2, wobei sich der Greiferkopf in unterschiedlichen Stellungen befindet,
Fig. 5 in einer Draufsicht entsprechend der Fig. 1 eine abgewandelte Ausführungsform und
Fig. 6 eine Seitenansicht in Richtung des Pfeiles VI in Fig. 5.

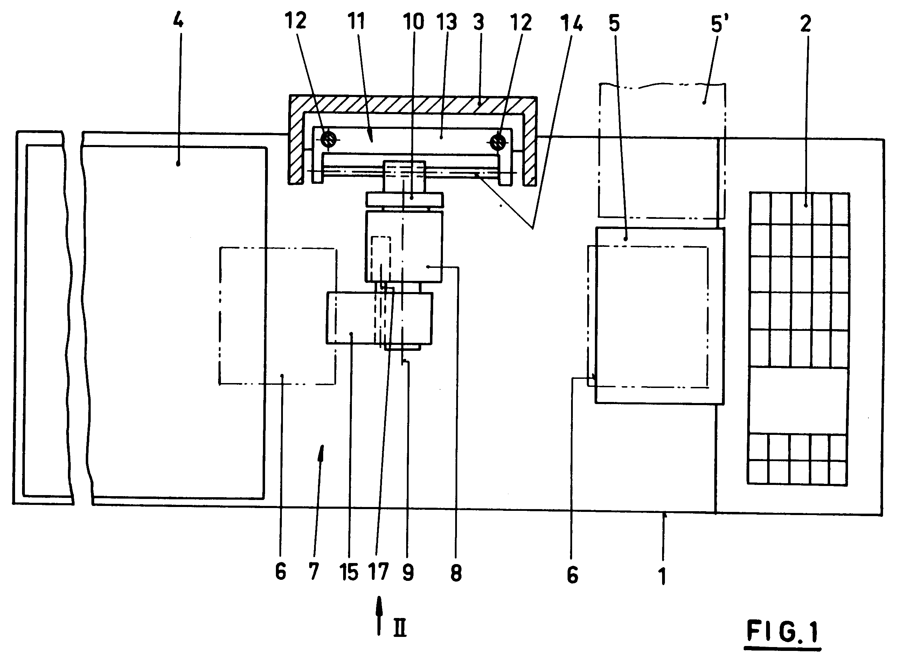

Der in den Fig. 1 - 4 dargestellte Kassettenwechsler weist ein flaches Grundgehäuse 1 auf, in dem sich eine Steuerung befindet. An einem Ende des Grundgehäuses 1 ist eine Tastatur 2 zur Bedienung und Programmierung der Steuerung angeordnet. Das Grundgehäuse 1 trägt seitlich einen im wesentlichen flachen, senkrechten Führungsständer 3. An dem der Tastatur 2 entgegengesetzten Ende ist auf dem Grundgehäuse 1 eine Magnetbandeinheit 4 angeordnet, während im bestand hierzu auf der gegenüberliegenden Seite ein Kassettenmagazin 5 aufgenommen ist, das mit Abstand übereinander gestapelt mehrere Magnetbandkassetten 6 aufnimmt, die jeweils mit strichpunktierten Linien angedeutet sind.

Die Magnetbandeinheit 4, der Führungsständer 3 und das Kassettenmagazin 5 umgeben im Grundriß nach Fig. 1 einen Arbeitsraum 7, in dem sich ein Greiferkopf 8 bewegen kann. Der Greiferkopf 8 ist um eine horizontale Schwenkachse 9 schwenkbar an einem Greiferschlitten 10 gelagert, der über eine Kreuzschlittenanordnung 11 in der Frontfläche des Führungsständers 3 senkrecht und waagerecht gesteuert bewegbar ist. Die jeweiligen gesteuerten Bewegungsantriebe sind in der Zeichnung nicht dargestellt. Der Führungsständer 3 ist an der Seite des zwischen dem Kassettenmagazin 5 und der Magnetbandeinheit 4 befindlichen Arbeitsraumes 7 angeordnet.

Bei dem gezeigten Ausführungsbeispiel ist die Kreuzschlittenanordnung 11 vereinfacht mit senkrechten Rundführungen 12 dargestellt, an denen ein Führungsschlitten 13 senkrecht bewegbar geführt ist.

Der Führungsschlitten 13 trägt horizontale Rundführungen 14, an denen der Greiferschlitten 10 horizontal bewegbar geführt ist.

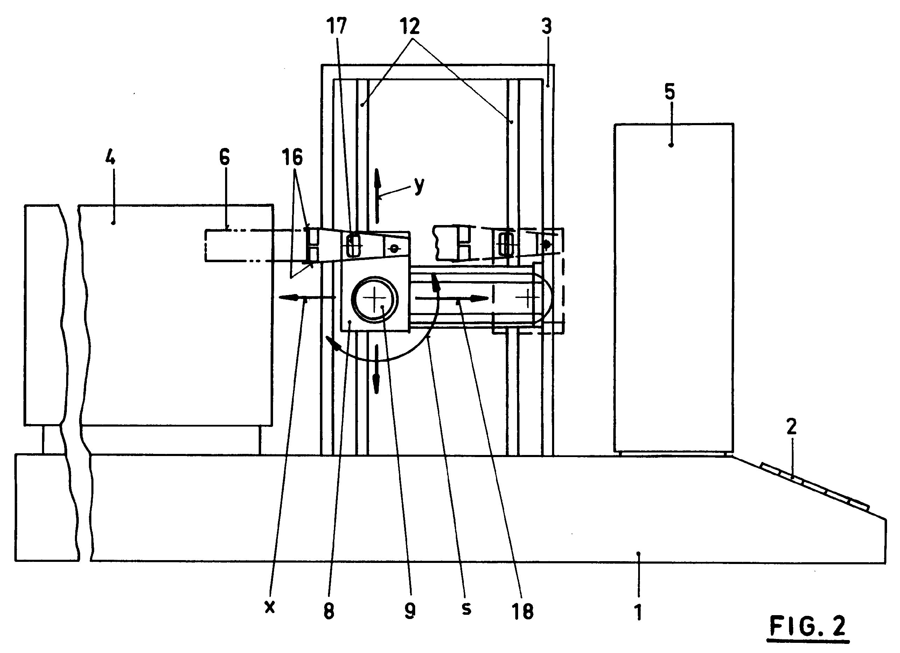

Dadurch ergibt sich für den Greiferkopf 8 eine Bewegungsmöglichkeit in drei Achsen (Fig. 2), nämlich einer waagerechten Bewegungsachse X, die sich zwischen dem kassettenmagazin 5 und der Magnetbandeinheit 4 erstreckt, einer senkrechten Bewegungsachse Y und einer in Fig. 2 mit dem Pfeil S angedeuteten Schwenkbewegung um die Schwenkachse 9, die senkrecht zu der Ebene der beiden Bewegungsachsen X und Y und somit parallel und im Abstand zu den Frontflächen des Kassettenmagazins 5 und der Magnetbandeinheit 4 verläuft.

Ein Kassettengreifer 15 ist an einer Seite des Greiferkopfes 8 im Abstand zu dessen Schwenkachse 9 angebracht und erstreckt sich quer zur Schwenkachse 9. Der Kassettengreifer 15 weist zwei Greiferbacken 16 auf, die durch Federkraft zangenartig gegeneinander gedrückt werden. Durch einen zwischen den beiden Greiferbacken 16 angeordneten, um eine horizontale Achse schwenkbaren Nockenkörper 17, der eine angenähert rechteckige Querschnittsfläche aufweist, können die beiden Greiferbacken 16 gegen die Federkraft auseinandergedrückt werden, um die Magnetbandkassette 6 aufzunehmen bzw. freizugeben.

In den Fig. 1 und 2 ist der Greiferkopf 8 in einer Position dargestellt, in der er eine Magnetbandkassette 6 übernommen hat, die aus dem Aufnahmeschacht der Magnetbandeinheit 4 freigegeben wurde. Der Greiferkopf 8 bewegt sich aus der in Fig. 2 mit ausgezogenen Linien dargestellten Stellung in horizontaler Richtung des Pfeiles 18 in die mit gestrichelten Linien angedeutete Stellung, in der die vom Kassettengreifer 16 übernommene Magnetbandkassette 6 vollständig aus der Magnetbandeinheit 4 herausgezogen ist.

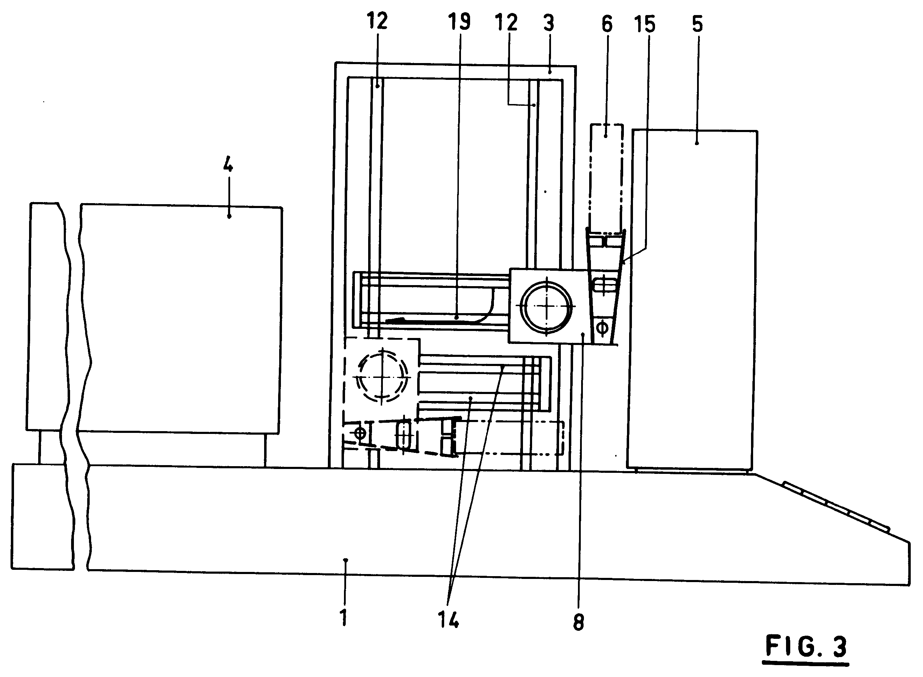

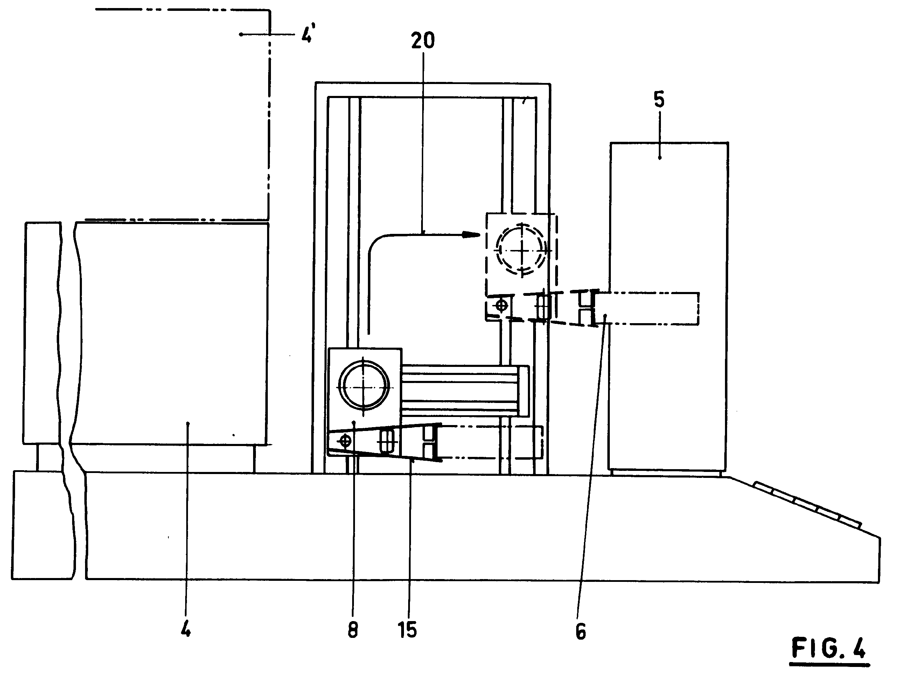

Aus dieser Stellung wird der Greiferkopf 8 in die in Fig. 3 mit ausgezogenen Linien dargestellte Stellung um 90° geschwenkt und fährt bei gleichzeitiger weiterer Schwenkbewegung in die in Fig. 3 gestrichelt angedeutete Stellung. Diese Bewegung ist durch einen Pfeil 19 angedeutet. Aus der in Fig. 3 erreichten Stellung, die in Fig. 4 wieder mit ausgezogenen Linien dargestellt ist, fährt der Greiferkopf 8 in Richtung des Pfeiles 20 in die in Fig. 4 mit gestrichelten Linien dargestellte Stellung, wobei die aufgenommene Magnetbandkassette 6 in der gewünschten, durch die Programmierung der Steuerung vorgegebenen Höhenlage in ein freies Fach des Kassettenmagazins 5 eingeschoben wird.

In entsprechender Weise erfolgt bei umgekehrtem Bewegungsablauf die Entnahme einer Magnetbandkassette 6 aus dem Kassettenmagazin 5 und die Bestückung der Magnetbandeinheit 4. Hierzu reicht es jedoch nicht aus, die Magnetbandkassette nur in den Aufnahmeschacht der Magnetbandeinheit 4 einzuführen; die Magnetbandkassette 6 muß vielmehr noch vollständig in den Aufnahmeschacht eingeschoben werden. Auch dieser zusätzliche Vorgang kann in einfacher Weise durch den dargestellten Kassettenwechsler ausgeführt werden. Hierzu wird der zangenartige Kassettengreifer 15 in der in Fig. 2 links gezeigten Stellung durch eine Schwenkung des Nockenkörpers 17 geschlossen und in dieser geschlossenen Stellung gegen die bereits teilweise im Aufnahmeschacht der Magnetbandeinheit 4 aufgenommene Magnetbandkassette 6 horizontal verfahren. Dabei drückt der Kassettengreifer 15 die Magnetbandkassette 6 vollständig in den Aufnahmeschacht der Magnetbandeinheit 4 ein.

In Fig. 4 ist mit strichpunktierten Linien angedeutet, daß über der beschriebenen Magnetbandeinheit 4 eine weitere Magnetbandeinheit 4' angeordnet werden kann, die in gleicher Weise durch den Kassettenwechsler bedient werden kann.

In Fig. 1 ist neben dem beschriebenen Kassettenmagazin 5 mit strichpunktierten Linien ein weiteres Kassettenmagazin 5' angedeutet, das mittels eines (nicht dargestellten) Verschiebeschlittens in die Position des Kassettenmagazins 5 geschoben werden kann, um in den Greifbereich des Kassettenwechslers zu gelangen. Stattdessen ist es auch möglich, mehrere, beispielsweise vier Kassettenmagazine auf einem Drehtisch anzuordnen und nacheinander wahlweise in den Greifbereich des Kassettenwechslers zu bringen.

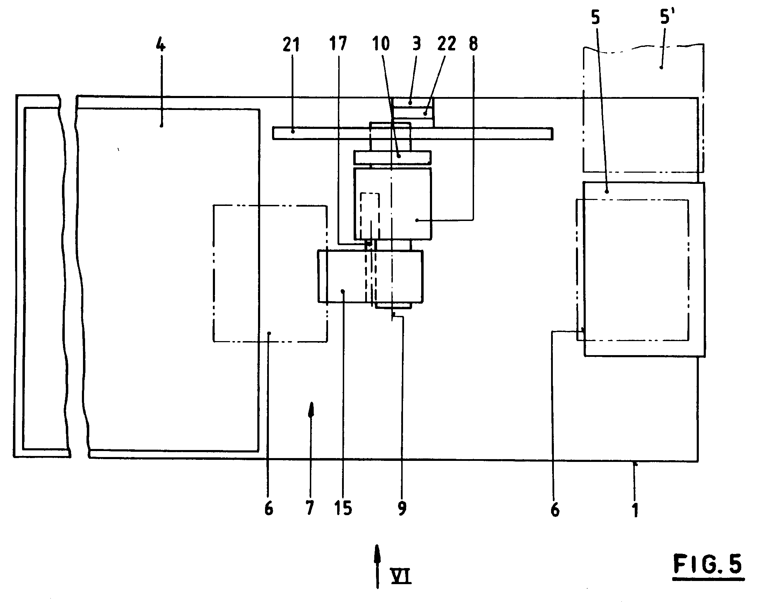

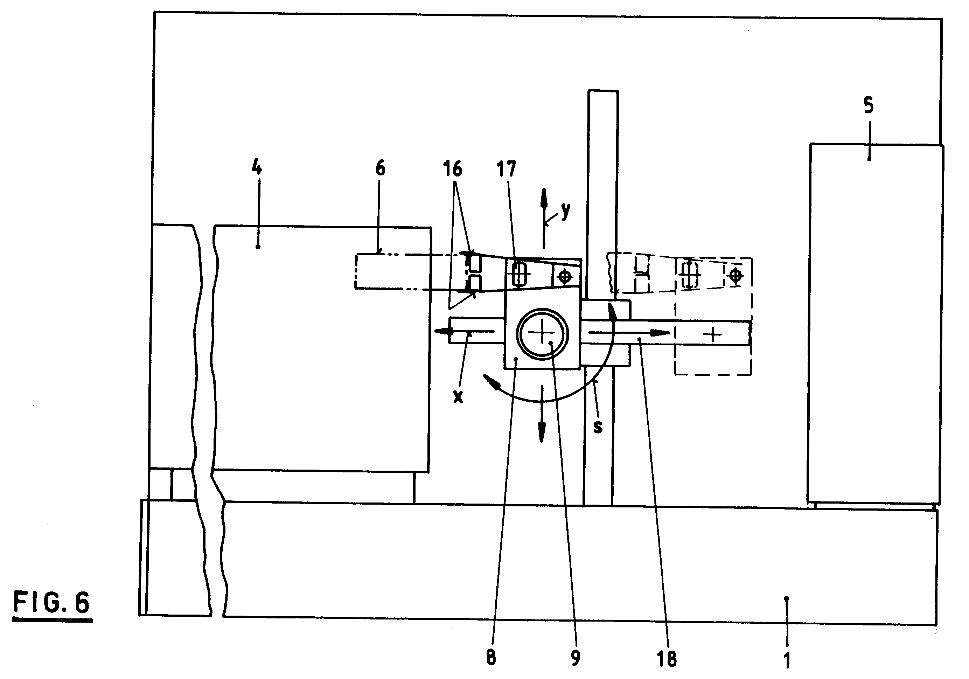

Das in den Fig.5 und 6 dargestellte Ausführungsbeispiel eines Kassettenwechslers unterscheidet sich von dem Ausführungsbeispiel nach den Fig. 1 und 2 im wesentlichen nur dadurch, daß anstelle des Führungsständers mit der beschriebenen Kreuzschlittenanordnung eine waagerechte Linearführung 21 für den Greiferschlitten 10 vorgesehen ist, die an einer senkrechten Linearführung 22 verfahrbar ist. Diese senkrechte Linearführung 22 bildet dabei den Führungsständer 3, der an einer Seite des Arbeitsraumes 7 angeordnet ist. Der Greiferschitten 10 ist entlang der waagerechten Linearführung 21 verfahrbar, die an der senkrechten Linearführung 22 verfahrbar ist.

Die übrigen Teile des in den Fig. 5 und 6 dargestellten Kassettenwechslers entsprechen in ihrem grundsätzlichen Aufbau und in ihrer Funktionsweise den beim Kassettenwechsler nach den Fig. 1 und 2 beschriebenen Teile und sind daher mit gleichen Bezugszeichen versehen.

Der Kassettenwechsler kann in einem (nicht dargestellten) geschlossenen Gehäuse untergebracht werden.

Die besonders kompakte Bauform des Kassettenwechslers ermöglicht es, den Kassettenwechsler aus Sicherheitsgründen in einem feuer- und einbruchsicheren Panzerschrank od.dgl. unterzubringen, wo er auch ohne Aufsicht und Bedienung beispielsweise nachts arbeiten kann, ohne daß dadurch die Sicherheit der gespeicherten Daten gefährdet würde.

## Patentansprüche

1. Kassettenwechsler zur automatischen Handhabung von Magnetbandkassetten zwischen einem Kassettenmagazin und einer Magnetbandeinheit, wobei ein Greiferschlitten an einem Führungsständer in einer senkrechten und einer waagerechten Bewegungsachse bewegbar ist und einen Greiferkopf mit einem Kassettengreifer trägt, der um eine rechtwinklig zu diesen beiden Bewegungsachsen verlaufende Schwenkachse schwenkbar ist, dadurch gekennzeichnet, daß das Kassettenmagazin (5) und die Magnetbandeinheit (4) einander gegenüberstehend angeordnet sind und der Greiferkopf (8) in dem dazwischenliegenden Arbeitsraum (7) bewegbar ist, daß sich die waagereche Bewegungsachse (X) des Greiferschlittens (10) zwischen dem Kassettenmagazin (5) und der Magnetbandeinheit (4) erstreckt und daß sich der Kassettengreifer (15) quer zur Schwenkachse (9) des Greiferkopfes (8) erstreckt.

2. Kassettenwechsler nach Anspruch 1, dadurch gekennzeichnet, daß der Kassettengreifer (15) an einer Seite des Greiferkopfes (8) im Abstand zur Schwenkachse (9) des Greiferkopfes (8) angeordnet ist.

3. Kassettenwechsler nach Anspruch 1, dadurch gekennzeichnet, daß der Greiferkopf (8) zwei durch Federkraft zangenartig gegeneinander gedrückte Greiferbacken (16) aufweist, die durch einen dazwischen angeordneten drehbaren Nockenkörper (17) auseinanderbewegbar sind.

4. Kassettenwechsler nach Anspruch 1, dadurch gekennzeichnet, daß der Führungsständer (3) an der Seite des zwischen dem Kassettenmagazin (5) und der Magnetbandeinheit (4) befindlichen Arbeitsraumes (7) angeordnet ist.

5. Kassettenwechsler nach Anspruch 1 oder 4, dadurch gekennzeichnet, daß der Greiferschlitten (10) über eine Kreuzschlittenanordnung (11) in der Frontfläche des Führungsständers (3) senkrecht und waagerecht gesteuert bewegbar ist.

6. Kassettenwechsler nach Anspruch 1, dadurch gekennzeichnet, daß der Greiferschitten (10) entlang einer waagerechten Linearführung (21) verfahrbar ist, die an einer senkrechten Linearführung (22) verfahrbar ist.

7. Kassettenwechsler nach Anspruch 6, dadurch gekennzeichnet, daß die senkrechte Linearführung (22) den Führungsständer (3) bildet.

## Claims

1. Cassette changer for the automatic manipulation of magnetic tape cassettes between a cassette magazine and a magnetic tape unit, wherein a claw slide may be moved on a guide support in a vertical and a horizontal movement axis, said claw slide carrying a claw head with a cassette claw pivoting around a pivot axle extending at right angles to said two movement axes, characterized in that the cassette magazine (5) and the magnet tape unit (4) are located opposite each other and the claw head (8) is moving in the work space (7) between them, that the horizontal movement axis (X) of the claw slide (10) extends between the cassette magazine (5) and the magnetic tape unit (4) and that the cassette claw (15) extends transversely to the pivot axle (9) of the claw head (8).

2. Cassette changer according to Claim 1, characterized in that the cassette claw (15) is located on one side of the claw head (8) spaced apart from the pivot axle (9) of the claw head (8).

3. Cassette changer according to Claim 1, characterized in that the claw head (8) comprises two claw jaws (16) pressed against each other scissor like by spring force, said claw jaws being capable of being moved apart by a rotating cam body (17) located between them.

4. Cassette changer according to Claim 1, characterized in that the guide support (3) is located at the side of the work space (7) formed between the cassette magazine (5) and the magnetic tape unit (4).

5. Cassette changer according to Claim 1 or 4, characterized in that the claw slide (10) may be moved by means of a cross slide layout (11) in the frontal surface of the guide support (3) in a controlled manner, vertically and horizontally.

6. Cassette changer according to Claim 1, characterized in that the claw slide (10) may be displaced along a horizontal linear guide (21), which in turn may be moved on a vertical linear guide.

7. Cassette changer according to Claim 6, characterized in that the vertical linear guide (22) forms the guide support (3).

## Revendications

1. Echangeur de cassettes pour permettre la manipulation automatique de cassettes de bandes magnétiques entre un magasin de cassettes et un magnétophone, échangeur dans lequel un chariot de préhension peut être déplacé sur une colonne de guidage dans un axe de déplacement vertical et un axe de déplacement horizontal et porte une tête de préhension avec un organe preneur de cassette, qui peut pivoter autour d'un pivot s'étendant à angle droit avec ces deux axes de déplacement, caractérisé en ce que le magasin de cassettes (5) et le magnétophone (4) sont agencés l'un en regard de l'autre et la tête de préhension (8) peut se déplacer dans l'espace de travail (7) qui se situe entre eux, l'axe de déplacement horizontal (X) du chariot de préhension s'étend entre le magasin de cassettes (5) et le magnétophone (4) et l'organe preneur de cassette (15) s'étend transversalement au pivot (9) de la tête de préhension (8).

2. Echangeur de cassettes selon la revendication 1, caractérisé en ce que l'organe preneur de cassette (15) est agencé sur un côté de la tête de préhension (8) à distance du pivot (9) de la tête de préhension (8).

3. Echangeur de cassettes selon la revendication 1, caractérisé en ce que la tête de préhension (8) comporte deux mors preneurs (16) pressés l'un contre l'autre par une force élastique à la manière d'une pince, ces mors pouvant être séparés l'un de l'autre par un corps de came tournant (17) agencé entre eux.

4. Echangeur de cassettes selon la revendication 1, caractérisé en ce que la colonne de guidage (3) est agencée sur le côté de l'espace de travail (7) se trouvant entre le magasin de cassettes (5) et le magnétophone (4).

5. Echangeur de cassettes selon la revendication 1 ou 4, caractérisé en ce que le chariot de préhension (10) peut se déplacer par commande verticalement et horizontalement via un agencement en croix (11) dans la surface frontale de la colonne de guidage (3).

6. Echangeur de cassettes selon la revendication 1, caractérisé en ce que le chariot de préhension (10) peut se déplacer le long d'une glissière linéaire horizontale (21) qui peut se déplacer sur une glissière linéaire verticale (22).

7. Echangeur de cassettes selon la revendication 6, caractérisé en ce que la glissière linéaire verticale (22) constitue la colonne de guidage (3).
